# EUROPEAN PATENT APPLICATION

(11) **EP 2 584 315 A1**
(43) Date of publication of application: **24.04.2013**
(21) Application number: 11008359.9
(22) Date of filing: 17.10.2011
(51) Int. Cl.: G01C 21/36

(54) **Navigation method and navigation system**

(71) Applicant: Harman Becker Automotive Systems GmbH, 76307 Karlsbad (DE)
(72) Inventor: Radner, Markus, 81873 München (DE)
(74) Representative: Müller, Wolf-Christian

(57) **Abstract**

A navigation method and navigation system (200),
- wherein a map (100) is output;
- wherein a current position is ascertained;
- wherein a position symbol (110) associated with the current position is displayed on the map (100), the position symbol (110) having an area (111, 112);
- wherein a house number (1, 2, 3, 4, 5, 6, 7, 8, 9, 10, 11, 12, 13, 14) associated with the current position is ascertained; and
- wherein the house number (1, 2, 3, 4, 5, 6, 7, 8, 9, 10, 11, 12, 13, 14) is displayed in the area (111, 112) of the position symbol (110).

## Description

The present invention relates to a navigation method and a navigation system.

The EP 1879001 A1 relates to a method for organizing and managing data in a navigation database. The database contains a description position, like street name.

The object of the invention is to improve a navigation method as much as possible.

This object is achieved by a method having the features of the independent claim 1. Advantageous refinements are the subject matter of dependent claims and included In the description.

A navigation method Is therefore provided. In the method, a map is output. A current position Is ascertained. A Position symbol associated with the current position is displayed on the map. The position symbol has an area for displaying a number.

A house number associated with the current position is ascertained. The ascertained house number is displayed in the area of the position symbol.

The method makes it possible to significantly improve navigation to a specific house number. For example, It enables a driver to compare the house number displayed with the aid of the navigation system with house number signs on the street. The method also makes it possible to locate a house number even if there is no house number sign on the street. The user need not to guess the current house number himself based on known fixed house numbers at junctions etc..

A further object of the invention is to provide a navigation system that is improved as far as possible.

This object is achieved by the navigation system having the features of the independent claim 9. Advantageous refinements are included in the description.

A navigation system having a display device and an arithmetic unit and a position determining unit is therefore provided.

The position determining unit is configured to ascertain a current position.

The display unit and the arithmetic unit are configured to output a map.

The arithmetic unit is configured to ascertain a house number associated with the current position.

The display unit and the arithmetic unit are configured to display a position symbol on the map. The position symbol is associated with the current position. The position symbol has an area.

The display unit and the arithmetic unit are configured to display the ascertained house number In the area of the position symbol.

The embodiments described below relate to both the navigation method and the navigation system. Functions of the navigation system may be derived from the method features.

According to a embodiment, the house number is ascertained by resolving a coordinate of the current position to a current address. The current address advantageously includes a current street and at least one current house number.

In another embodiment, a house number range is ascertained on the basis of the current address. The house number associated with the current position is ascertained by interpolating the house number range.

In another embodiment, the display of the house number in the area of the position symbol is deactivated or activated depending on a match between the current address and a predetermined address area. The predetermined address area is estimated e.g. from a calculated route.

In another advantageous embodiment, it is provided that the display of the house number is activated based on an input. For example, an activation button is provided in a menu item or in the map display on a touch screen.

According to an advantageous embodiment, a current velocity and/or a current acceleration is ascertained and compared with a threshold. The displaying of the house number is deactivated based on the current velocity and/or the current acceleration exceeding the threshold and/or activated based on the current velocity and/or the current acceleration dropping below the threshold.

In another advantageous embodiment, a left-hand house number is determined on the left side viewed in the direction of movement, and a right-hand house number is determined on the right side viewed in the direction of movement. The left-hand house number is displayed in a left area of the position symbol, and the right-hand house number is displayed in a right area of the position symbol. Advantageously the left area and the right area of the position symbol are aligned to the corresponding street boundaries and advantageously stay aligned during a turn around.

According to an advantageous embodiment, the left area of the position symbol is hidden when no left-hand house number can be ascertained associated to the current position. The right area of the position symbol is hidden when no right-hand house number can be ascertained associated to the current position.

The embodiments described above are particularly advantageous individually as well as in combination. All embodiments may be combined with each other. Some possible combinations are explained in the description of the exemplary embodiments in the figures. However, these possibilities illustrated therein for combining the embodiments are not limiting.

The invention is explained in greater detail below on the basis of exemplary embodiments illustrated in the drawings,
where
- Figures 1a and 1b: show schematic views of a map;
- Figure 2: shows another schematic view of a map;
- Figures 3a through 3c: show additional schematic views of a map; and
- Figure 4: shows a schematic view of a navigation system.

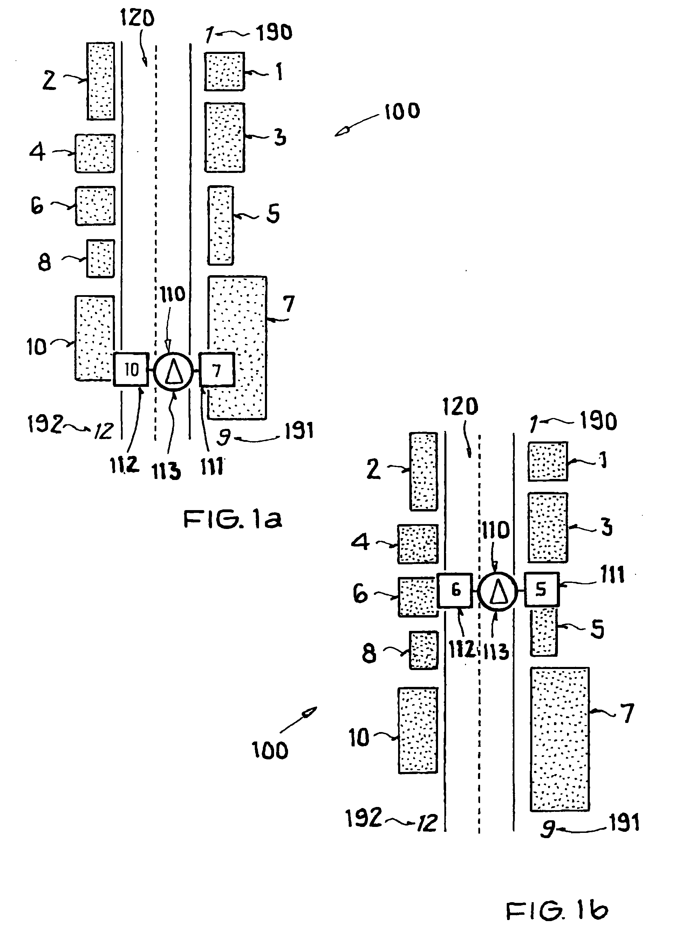

A schematic view of a map 100 is Illustrated In Figure 1a. The map display in the exemplary embodiment in Figure 1a has only a single street 120. A plurality of streets is usually displayed on a map 100, as a function of a zoom factor. A position symbol 110 is displayed on street 120. The map position of position symbol 120 is determined on the basis of a current position determined from measuring signals, the current position being determined, for example, with the aid of a GPS signal (GPS - Global Positioning System).

Houses 1, 2, 3, 4, 5, 6, 7, 8, 10 are furthermore displayed schematically as rectangles on the layout in Figure 1a. In this case, each house number 1, 2, 3, 4, 5, 6, 7, 8, 10 corresponds to the relevant reference numeral. In the exemplary embodiment In Figure 1a, housed 1, 2, 3, 4, 5, 6, 7, 8, 10 are displayed purely by way of example. Alternatively, contiguous houses may be displayed on map 100 as polygons. Fixed-position house numbers may be displayed on map 100 as numbers 190, 191, 192, in particular at junctions In road 120.

In the exemplary embodiment in Figure 1a, position symbol 110 has an arrow 113 to display the direction of travel, and a right area 111 to display a right-hand house number 7, and a left-hand area 112 to display a left-hand house number 10. House numbers 7, 10 are displayed in small areas 111, 112 to the right and left of arrow 113 for the current position and move along with the vehicle position relative to map 100. Another map position of position symbol 110 is displayed in Figure 1b. House numbers 6 and 5 are displayed accordingly.

To determine the current position, a coordinate (longitude/latitude, etc.) is determined, for example with the aid of a GPS satellite signal. A current address associated with the coordinate is determined from the coordinate with the aid of a database. This process is also referred to as map matching. The resolution of the coordinate to an address is dependent on a degree of detail of the database and an accuracy of the coordinate. For example, the street and the relevant house number are entered in the database as an address.

If the degree of detail is low, for example, a block of houses having a house number range is entered in the database. For example, a house number range 1 through 9 may be defined In the database instead of house numbers 1, 3, 5, 7, 9--as illustrated in Figure 1b. The current address is the current road and house number range 1 through 9. House number 1, 3, 5, 7 or 9 associated with the current position is ascertained by interpolating house number range 1 through 9. For this purpose, house number range 1 through 9 Is divided, for example, into five parts, and one house number 1, 3, 5, 7 or 9 is assigned to each part. Current house number 5 is subsequently ascertained based on the current position within house number range 1 through 9.

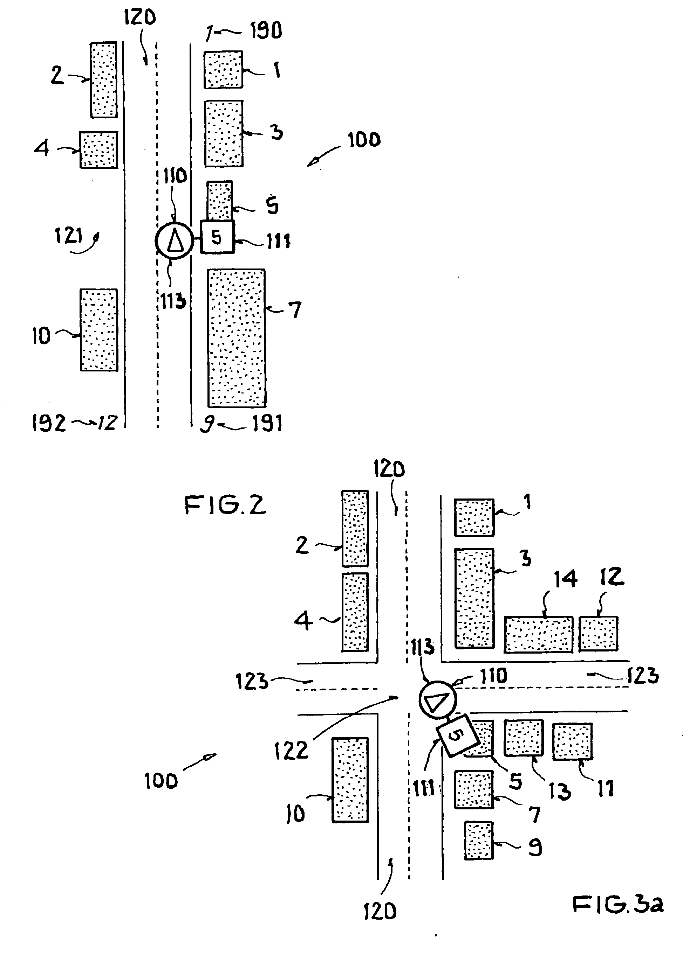

Another exemplary embodiment, which has another section of a map 100, is illustrated In Figure 2. A gap between houses 121, and thus no house, is provided on the left side In the direction of travel/movement (or a house number is unable to be uniquely assigned), so that the left-hand area of position symbol 110 is hidden. Conversely, right-hand area 111 of position symbol 110 is displayed with house number 5.

Another exemplary embodiment, which has another section of a map 100, is illustrated In Figures 3a through 3c. A junction 122, where roads 120, 123 intersect, is Illustrated in Figure 3a. In this case, house numbers 1, 3, 5, 7, 9, 2, 4, 10 are associated with road 120, and house numbers 11, 13, 12, 14 are associated with road 123. During a turning maneuver, only a house number 5 may be uniquely assigned to a current position on the right side In the direction of travel, so that right-hand area 111 of position symbol 110 is displayed, while the left-hand area is hidden.

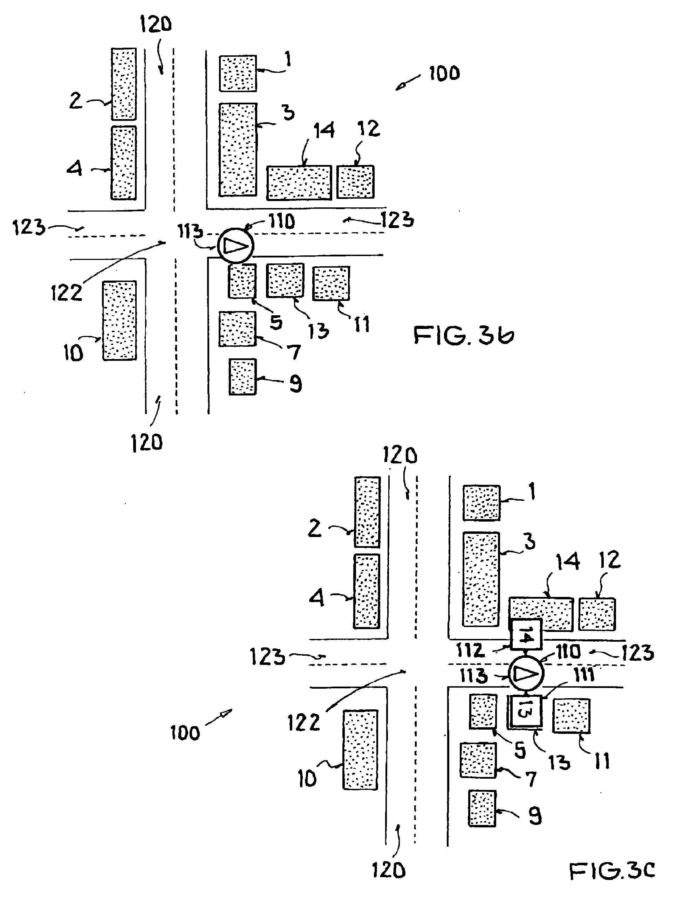

According to Figure 3b, the vehicle has turned into road 123. Corner houses 3 and 5 to the left and right of the current position do not belong to road 123, where the vehicle is located, so that house numbers 3, 5 are not displayed. In this case, position symbol 110 is displayed only using direction arrow 113 or the like. Houses 13 and 14, on the other hand, belong to road 123 In Figure 3c, so that associated house numbers 13, 14 are displayed in areas 111, 112 of position symbol 110.

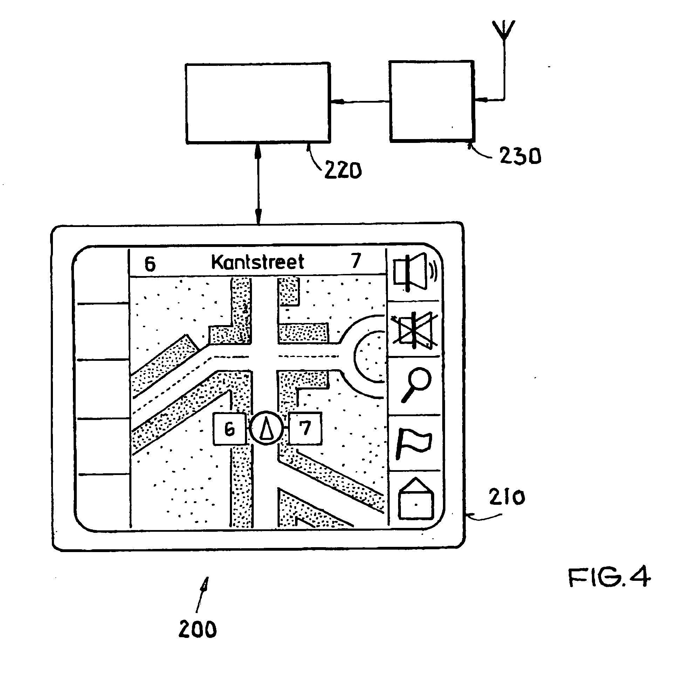

An exemplary embodiment of a navigation system 200 is displayed schematically in Figure 4. Navigation system 200 has an arithmetic unit 220 and an optical display 210 and a position determining unit 230. Position determining unit 230 is, for example, a GPS receiver. Arithmetic unit 220 is, for example, a processor (CPU). Optical display 210 is, for example, a touch screen. Position determining unit 230 is configured to ascertain a current position. Display unit 210 and arithmetic unit 220 are configured to output a map 100 and to display the current position on map 100 with the aid of a position symbol 110, as illustrated by way of example in Figures 1a through 3c. Arithmetic unit 220 is configured to ascertain a house number 1, 2, 3, 4, 5, 6, 7, 8, 9, 10, 11, 12, 13, 14 associated with the current position. Display unit 210 and arithmetic unit 220 are configured to display house numbers 1, 2, 3, 4, 5, 6, 7, 8, 9, 10, 11, 12, 13, 14 in an area 111, 112 of position symbol 110, as displayed by way of example In Figures 1a through 3c.

The invention is not limited to the embodiment variants illustrated in Figures 1a through 4. For example, it is possible to use a different determination of the current position and/or the current address. The functionality of the navigation system according to Figure 4 may be particularly advantageously used for a motor vehicle or a hand-held navigation system.

### List of Reference Numerals

- 1, 2, 3, 4, 5, 6, 7, 8, 9, 10, 11, 12, 13, 14: House number
- 100: Map
- 110: Position symbol
- 111, 112: Area
- 113: Arrow
- 120, 123: Street
- 121: Gap between houses
- 122: Junction, intersection
- 191, 192, 193: Number
- 200: Navigation system
- 210: Display, touch screen
- 220: Arithmetic unit, CPU
- 230: Position determining unit, GPS receiver

## Claims

1. A navigation method,
- wherein a map (100) is output;
- wherein a current position is ascertained;
- wherein a position symbol (110) associated with the current position is displayed on the map (100), the position symbol (110) having an area (111, 112);
- wherein a house number (1, 2, 3, 4, 5, 6, 7, 8, 9, 10, 11, 12, 13, 14) associated with the current position is ascertained; and
- wherein the house number (1, 2, 3, 4, 5, 6, 7, 8, 9, 10, 11, 12, 13, 14) is displayed In the area (111, 112) of the position symbol (110).

2. The method according to claim 1,
- wherein the house number (1, 2, 3, 4, 5, 6, 7, 8, 9, 10, 11, 12, 13, 14) is ascertained by resolving a coordinate of the current position to a current address.

3. The method according to claim 2,
- wherein a house number range is ascertained on the basis of the current address, and the house number (1, 2, 3, 4, 5, 6, 7, 8, 9, 10, 11, 12, 13, 14) associated with the current position is ascertained by interpolating the house number range.

4. The method according to one of claims 2 or 3,
- wherein the display of the house number (1, 2, 3, 4, 5, 6, 7, 8, 9, 10, 11, 12, 13, 14) is deactivated or activated depending on a match between the current address and a predetermined address area.

5. The method according to one of the preceding claims,
- wherein the display of the house number (1, 2, 3, 4, 5, 6, 7, 8, 9, 10, 11, 12, 13, 14) is activated on the basis of an input.

6. The method according to one of the preceding claims,
- wherein a current velocity and/or a current acceleration is/are ascertained and compared with a threshold,
- wherein the display of the house number (1, 2, 3, 4, 5, 6, 7, 8, 9, 10, 11, 12, 13, 14) is deactivated if the current velocity and/or the current acceleration exceeds the threshold,
and/or
- wherein the display of the house number (1, 2, 3, 4, 5, 6, 7, 8, 9, 10, 11, 12, 13, 14) is activated If the current velocity and/or the current acceleration is below the threshold.

7. The method according to one of the preceding claims,
- wherein a left-hand house number (2, 4, 6, 8, 10, 12, 14) is determined on the left side viewed In a direction of movement, and a right-hand house number (1, 3, 5, 7, 9, 11, 13) is determined on the right side viewed in the direction of movement;
- wherein the left-hand house number (2, 4, 6, 8, 10, 12, 14) is displayed in a left area (112) of the position symbol (110), and the right-hand house number (1, 3, 5, 7, 9, 11, 13) is displayed in a right area (111) of the position symbol (110).

8. The method according to claim 6,
- wherein the left area (112) of the position symbol (110) is hidden when no left-hand house number (2, 4, 6, 8, 10, 12, 14) can be ascertained associated to the current position;
- wherein the right area (111) of the position symbol (110) is hidden when no right-hand house number (1, 3, 5, 7, 9, 11, 13) can be ascertained associated to the current position.

9. A navigation system (200),
- comprising a display unit (210);
- comprising an arithmetic unit (220); and
- comprising a position determining unit (230);
- wherein the position determining unit (230) is configured to ascertain a current position;
- wherein the display unit (210) and the arithmetic unit (220) are configured to output a map (100);
- wherein the arithmetic unit (220) is configured to ascertain a house number (1, 2, 3, 4, 5, 6, 7, 8, 9, 10, 11, 12, 13, 14) associated with the current position;
- wherein the display unit (210) and the arithmetic unit (220) are configured to output a position symbol (110) on the map (110), the position symbol (110) being associated with the current position, the position symbol (110) having an area (111, 112), and
- wherein the display unit (210) and the arithmetic unit (220) are configured to display the house number (1, 2, 3, 4, 5, 6, 7, 8, 9, 10, 11, 12, 13, 14) in the area (111, 112) of the position symbol (110).
